# EUROPEAN PATENT APPLICATION

(11) **EP 4 617 753 A1**
(43) Date of publication of application: **17.09.2025**
(21) Application number: 25159467.7
(22) Date of filing: 21.02.2025
(51) Int. Cl.: G02B 6/44

(54) **AN OPTICAL CABLE JUNCTION BOX**

(30) Priority: 15.03.2024 IT 202400005845
(71) Applicant: Prysmian S.p.A., 20126 Milano (IT)
(72) Inventor: PADDICK, Nathan, 20126 Milano (IT); BARNES, Andrew Paul, 20126 Milano (IT)
(74) Representative: Perani & Partners S.p.A.

(57) **Abstract**

An optical cable junction box (1) comprising a base member (10) configured to receive optical cables (2) comprising one or more optical fibers (3); a dome-shaped cover member (20) configured to define with the base member (10) an inner volume (V); a support frame (30) extending into the inner volume (V) between the base member (10) and an end support portion (31) along a longitudinal direction (X-X) transversal to the base member (10); a splice tray arrangement (40) attached to the support frame (30) extending from the support frame (30) along a first direction (A-A) transversal to the longitudinal direction (X-X), the splice tray arrangement (40) comprising one or more splice trays (41) configured to receive one or more optical fibres (3); one or more optical adapters (50) for receiving one or more pre-connectorized optical cable connectors (4) and optical connectors (5) for optical fibers (3), the optical adapters (50) being attached to the support frame (30) and being arranged along a second direction (B-B) transversal to the longitudinal direction (X-X).

## Description

### Field of the invention

The present invention relates to the field of equipment and components for the installation of optical cables in optical access networks. In particular, the present invention relates to an optical cable junction box for optical cables such as midspan cables and pre-connectorized optical cables.

### Background of the invention

A FTTx (for example FTTN, FTTC, FTTB, FTTH) network is an optical access network providing a number of end customers with broadband communication services from operators, i.e. with services requiring data transmission at a very high rate, for example of some Mbit/s.

Typically, a FTTx network comprises multiple junction or distribution boxes or cabinets which cooperate with an access network and which may be installed in or near the basement of the building where end users reside, in an underground pit, on a wall, or on a pole. Junction or distribution boxes allow to splice the fibers from an input optical cable, such as the midspan cable, with drop connection cables, such as pre-connectorized optical cables.

An optical junction box needs to be opened, for example, for inspection, maintenance or substitution of fiber connections therein. During such operations there are significant risks of fiber damage as well as problems for the operator to correctly operate on the splices and on the optical cables.

Furthermore, optical junction boxes and cabinets of the state of art for FTTx applications are space consuming. It is to be noted that in the attempt to save space, the optical junction box and cabinet of the state of art provide complex solutions for optical fibers and optical cables routing, causing undesired bending of the fiber and difficulties in their managing.

In the state of art, there are different solutions for the junction box. An example is Hexatronic Dome closure Family of Hexatronic wherein the adapters for the pre-connectorized optical cable are attached with a support structure to the main spine in a raised position with respect to the splice tray. Furthermore, the support structure is perpendicular to the spine. Such arrangement forces the optical cables to a long route and bending as well as it is consuming in term of space.

Another example of junction box is Pre-connectorised XMJ of Prysmian wherein the adapters are attached to the spine. The connectors are inserted parallel to the spine length. Such arrangement requires a certain attention to the curvature of the fiber exiting from the adapter. Moreover, even if partially, the connectors are covered by the splice tray.

US11187865 B2 discloses fiber optic trays adapted to increase fiber splicing/connecting and fiber organizing capacity on the tray. The trays can include multiple splice circuits, each splice circuit including a splice holder area or a connector holder area having a plurality of splice holders or connector holders, and at least one fiber organizing structure such as a pair of oblong spool structures.

WO2022/072680 A1 discloses a fiber optic splice organizer includes a mounting bracket, and at least one tray of a first type attached to the mounting bracket. The first type of tray has a first length and an interior volume for storing fiber optic splices. At least one tray of a second type is attached to the mounting bracket. The second type of tray has a second length and an interior volume for storing a different quantity of fiber optic splices than the first type of tray. A modular extension is attachable to the first or second types of trays to increase their respective lengths.

Due to the vertical development and specific splice trays, the prior art solutions have fiber management problems in view of the attachment of the pre-connectorized cable with respect to the splice tray and the relative spacing between the splice trays and adapters. Furthermore, the prior art solutions are space consuming for the arrangement of the spine, trays and adapters and they involve complex routings of the fibers increasing the risks of damages due to the bending and difficulties in the installation/maintenance operations.

### Summary of the invention

The Applicant has tackled the problem of optimizing the relative arrangements of the adapters splice trays whereby fiber management is simplified and fibers damaging risks are reduced as well as the overall space of the junction cable box is reduced, thereby saving space.

The Applicant has found that providing an optical cable junction box having a base, a support frame extending from the base along a longitudinal direction transversal to the base, adapters and splice trays attached to the support frame, wherein the adapters and splice trays are arranged along directions transversal to the longitudinal direction, optimizes and improves the fiber management and at the same time reduces the fiber damaging risks and saves space.

Therefore, according to one aspect, the present invention relates to an optical cable junction box comprising a base member configured to receive optical cables comprising one or more optical fibers, a dome-shaped cover member configured to define with the base member an inner volume, a support frame extending into the inner volume between the base member and an end support portion along a longitudinal direction transversal to the base member, a splice tray arrangement attached to the support frame extending from the support frame along a first direction transversal to the longitudinal direction, the splice tray arrangement comprising one or more splice trays configured to receive one or more optical fibres, wherein the optical cable junction box comprises one or more optical adapters for receiving one or more pre-connectorized optical cable connectors and optical connectors for optical fibers, the optical adapters being attached to the support frame and being arranged along a second direction transversal to the longitudinal direction.

According to one embodiment, the support frame comprises a first support member extending from the base along the longitudinal direction, the first support member being configured to retain the splice trays arrangement, the splice trays being hinged to the first support member.

According to one embodiment, the first direction and the second direction define with the longitudinal direction respectively a first angle and a second angle in a range higher than 0° and lower than 90°.

According to one embodiment, the support frame has a first side and an opposed second side and - the support frame comprises a first support member and a second support member.

According to one embodiment, each optical adapter has a first end opening and opposed second end opening mutually spaced apart along the second direction, the first end opening and the second end opening being respectively: arranged at the first side and at the second side and configured to retain the pre-connectorized optical cable connectors and the optical connectors for optical fibres.

According to one embodiment, the first support member extending from the base along the longitudinal direction, the first support member being configured to retain the splice trays arrangement on the first side, the splice trays being hinged to the first support member; the second support member protruding from the first support member transversally to the longitudinal direction and comprising adapter seats configured to hold the optical adapters along the second direction.

According to one embodiment, the support frame comprises a recess having a lower base, a lateral wall and an access opening on the second side, the recess being configured to accommodate the optical connectors for the optical fibers held by the optical adapters and at least a portion of the optical fibers, the first support member and the second support member defining the lower base, the lateral wall and the access opening.

According to one embodiment, the support frame comprises one or more routing passages configured to route one or more optical fibers from the second side to the splice trays on the first side, on the second side one or more first routing paths to route the optical fiber from the adapters to routing passages, the first routing paths starting from the recess.

According to one embodiment, the support frame comprises one or more second routing paths to route the optical fibers from the splice trays to the base member.

According to one embodiment, the first direction and the second direction define angles with the longitudinal direction in a range 15° to 75°, preferably in a range 20° to 60°.

According to one embodiment, first direction and the second direction define same angles with respect the longitudinal direction.

According to one embodiment, the base member comprises one or more openings for receiving optical cables.

According to one embodiment, the splice tray arrangement is attached at the end support portion and the adapters are attached between the base member and the splice tray arrangement.

The present invention further relates to an optical cable junction box assembly comprising an optical cable junction box, one or more pre-connectorized optical cables attached to respective optical adapters at relative first end openings with one or more pre-connectorized optical cables connectors.

According to one embodiment, optical connectors for optical fibers attached to respective optical adapters at relative second end openings opposed to the relative first end openings along the second direction.

### Brief description of the drawings

The present invention will now be described in more detail hereinafter with reference to the accompanying drawings, in which embodiments of the invention are shown.
FIG. 1 is a section lateral view of an optical cable junction box assembly according to one embodiment of the invention;
FIG. 2 is a front view of the optical cable junction box assembly according to one embodiment of the invention with some parts removed and the retaining tray in an open position;
FIG. 3 is a perspective view of an optical cable junction box assembly of figure 2;
FIG. 4 is a perspective view of an optical cable junction box assembly of figure 2;
FIG. 5 is a perspective view of an optical cable junction box assembly of figure 1.
FIG. 6 is a schematic view of an optical cable junction box according to one embodiment of the invention with some parts removed and the retaining tray in an open position.

### Detailed description

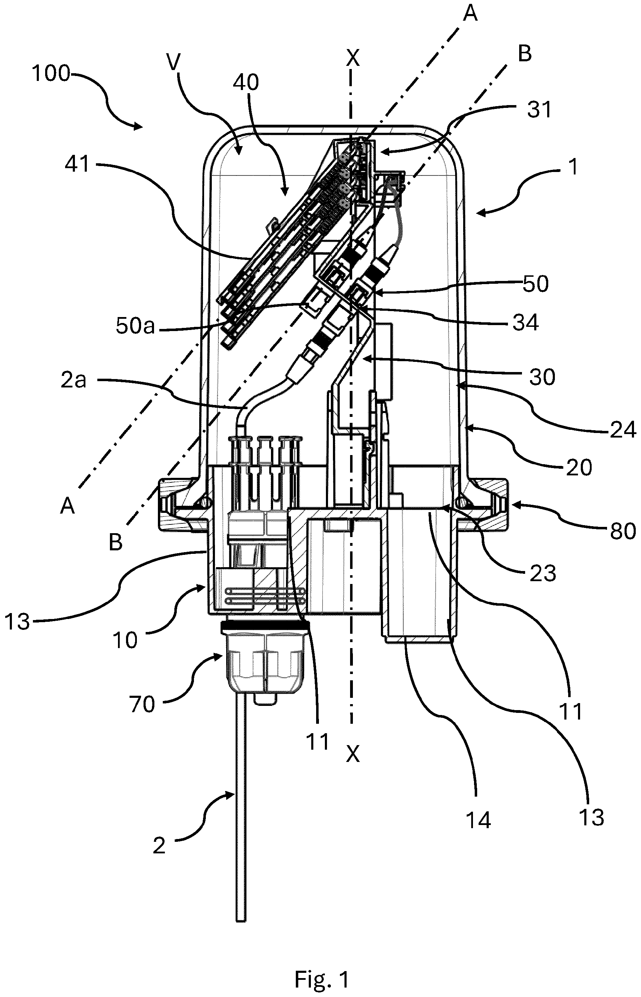

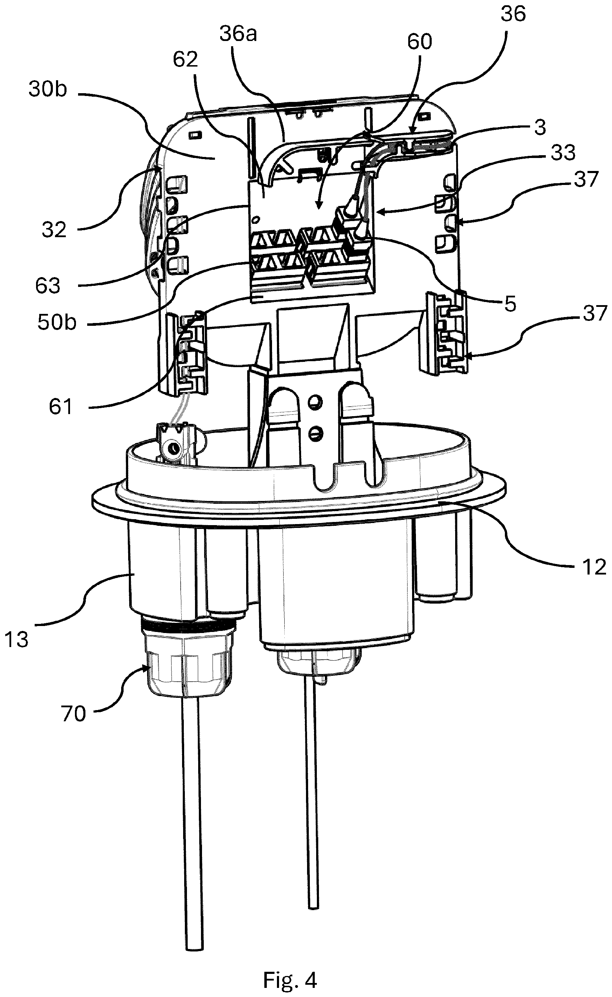

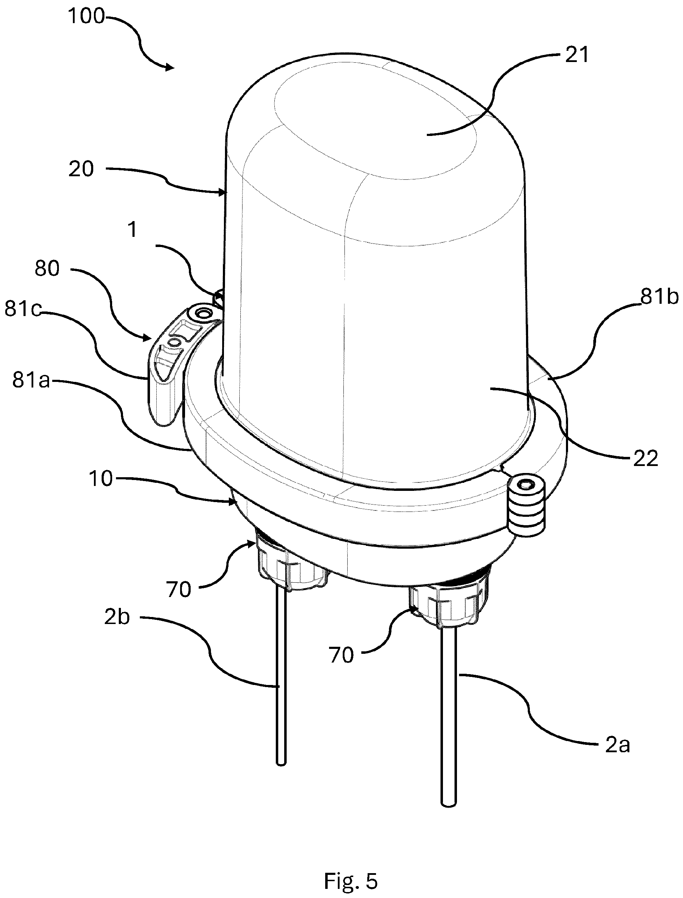

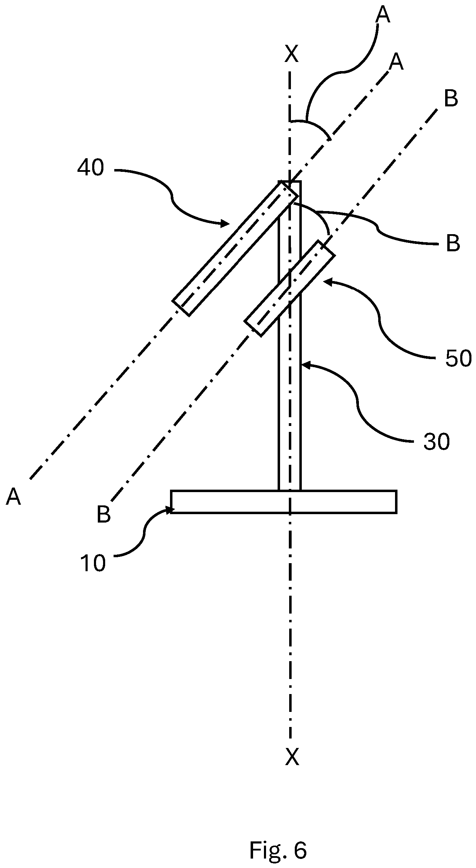

Figures 1-6 show an optical cable junction box 1.

The optical cable junction box 1 comprises a base member 10 configured to receive optical cables 2 comprising one or more optical fibers 3.

Optical cables 2 can comprise pre-connectorized optical cables 2a and standard optical cables 2b.

According to one embodiment, the base member 10 comprises one or more openings 11 for receiving optical cables 2. Namely, each opening 11 is configured to receive one or more optical cables 2.

The base member 10 comprises a base wall 12 and one or more insertion channels 13 extending along a longitudinal direction X-X from the openings 11 formed on the base wall 12. Namely, each insertion channel 13 extends between opening 11 and insertion opening 14.

The insertion channels 13 are configured to receive one or more optical cables 2.

According to one embodiment, insertion channels 13 are configured to receive and retain one or more cable glands 70 to retain the optical cables 2.

The optical cable junction box 1 comprises a dome-shaped cover member 20 configured to define with the base member 10 an inner volume V. The dome-shaped cover member 20 can comprise a cover ceiling 21 and a cover lateral wall 22 extending from the cover ceiling 21 and defining a cover opening 23 opposed to the cover ceiling 21. The cover ceiling 21 and the cover lateral wall 22 defines an open housing 24.

The base member 10 is configured to couple with the dome-shaped cover member 20 at the cover opening 23.

The dome-shaped cover member 20 is removably associated to base member 10. Namely, the base member 10 is configured to close the open housing 24.

In some embodiments, the optical cable junction box 1 comprises a closing arrangement 80 configured to engage and retain at least a portion of the base member 10 and a portion of the dome-shaped cover member 20 at the cover opening 23. For example, the base member 10 and the dome-shaped cover member 20 can comprise an edge flange to be engaged by the closing arrangement 80.

The closing arrangement 80 can comprise a closing clamp 81 which engages the portion of the base member 10 and the portion of the dome-shaped cover member 20, namely the flanges. The closing clamp 81 can comprise two clamp elements 81a, 81b hinged at one end portion and configured to mutually approach around the base member 10 and the dome-shaped cover member 20 at the cover opening 23. The closing arrangement 80 can further comprise at the other end portion of the two elements 81a, 81b, a locking element 81c configured to mutually lock the two clamp elements 81a, 81b on the engaged portion of the base member 10 and the dome-shaped cover member 20.

The base member 10 is configured to receive an optical cable 2 entering in the inner volume V and exiting from the inner volume V.

The optical cable junction box 1 comprises a support frame 30 extending into the inner volume V between the base member 10 and an end support portion 31 along a longitudinal direction X-X transversal to the base member 10. In several embodiments the longitudinal direction X-X is perpendicular to the base member 10.

The base member 10 defines a relative plane and the longitudinal direction X-X intersects the plane of the base member 10 in a single point.

The support frame 30 has a first side 30a and an opposed second side 30b. for example for receive on one side pre-connectorized optical cable connectors 4 and on the other side optical connectors 5 for optical fibers 3.

The optical cable junction box 1 comprises a splice tray arrangement 40 attached to the support frame 30 and extending from the support frame 30 along a first direction A-A transversal to the longitudinal direction X-X.

The support frame 30 defines a relative plane and the first direction A-A intersects the plane of the support frame 30 in a single point.

The splice tray arrangement 40 comprises one or more splice trays 41 configured to receive one or more optical fibers 3. Each splice trays 41 is configured to manage and route optical fibers 3 and relative splices.

According to some embodiments, each splice tray 41 is hinged to the support frame 30. Namely, the optical cable junction box 1 comprises a hinge arrangement for each splice tray 41 configured to pivotally hinge the splice tray 41 to the support frame 30. Each hinge arrangement comprises first connecting members associated to a splice tray 41 and second connecting members associated to the support frame 30 coupled with the first connecting member to define a rotation axis C-C to pivotally hinge the splice tray 41 to the support frame 30. For example, the rotation axis C-C is perpendicular to the longitudinal direction X-X.

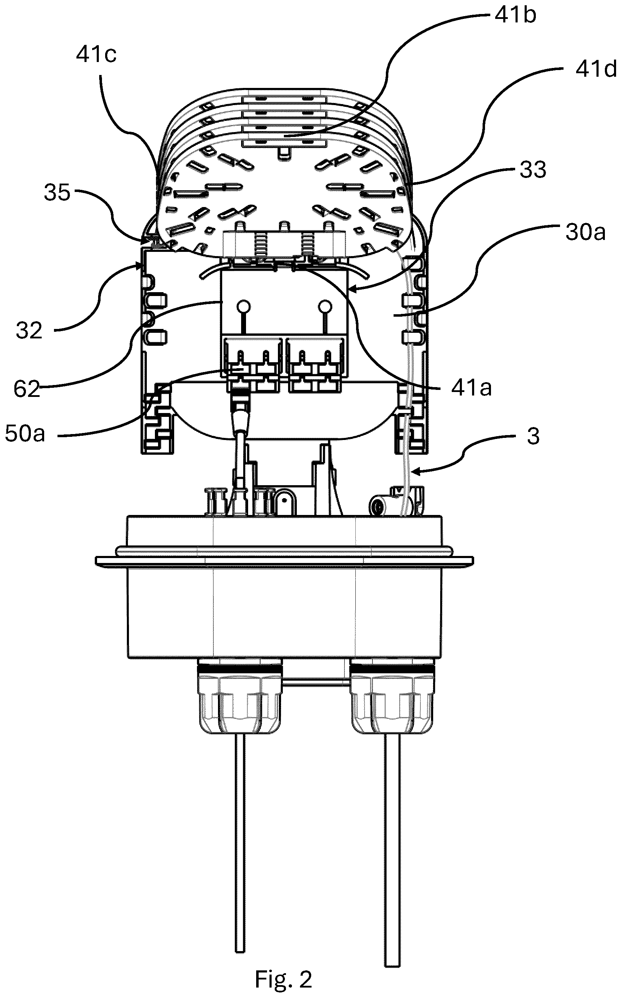

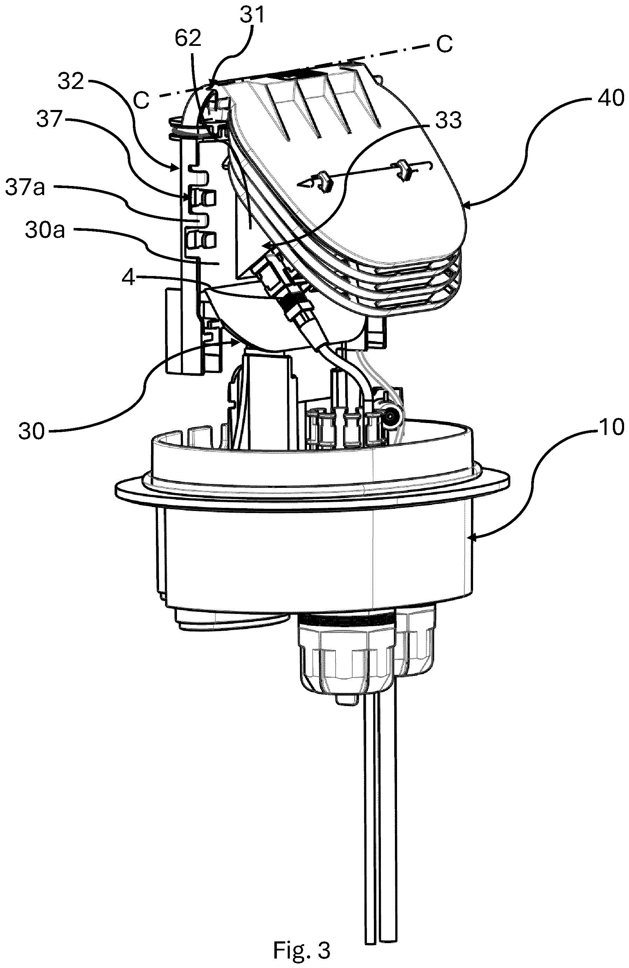

The splice trays 41 are configured to be rotated from a resting position as shown in figure 3 to a rotated position as shown in figure 2. The splice trays 41 in the resting position extend along the first direction A-A and define a first angle A with respect to the longitudinal direction X-X.

Namely, each splice tray 41 extends between a first edge portion 41a hinged to the support frame 30 to an opposed second edge portion 41b along a first extending direction and between a third edge portion 41c to an opposed fourth edge portion 41d along a second extending direction perpendicular to the first extending direction. In the resting position, the first extending direction corresponds with the first direction A-A.

The optical cable junction box 1 comprises one or more optical adapters 50 for receiving one or more pre-connectorized optical cable connectors 4 and optical connectors 5 for optical fibers 3. The optical adapters 50 are attached to the support frame 30 and are arranged along a second direction B-B transversal to the longitudinal direction X-X.

The second direction B-B intersects the plane of the support frame 30 in a single point.

The second direction B-B defines a second angle B with respect to the longitudinal direction X-X.

According to one embodiment, the first angle A and the second angle B are in a range higher than 0° and lower than 90°.

According to one embodiment, the first direction A-A and the second direction B-B define the angles A, B with the longitudinal direction X-X in a range 15° to 75°.

According to one embodiment, the first direction A-A and the second direction B-B define the angles A, B with the longitudinal direction X-X in a range 20° to 60°.

According to one embodiment, the first direction A-A and the second direction B-B define same angles A, B with respect the longitudinal direction X-X. Namely, the first angle A and the second angle B are equal.

Thanks to the inclination of the splice tray arrangement 40 and adapters 50, space is saved within the volume V, also providing a correct bending radius.

According to one embodiment, the splice tray arrangement 40 is attached at the end support portion 31 and the adapters 50 are attached between the base member 10 and the splice tray arrangement 40.

According to one embodiment, each optical adapter 50 has a first end opening 50a and opposed second end opening 50b mutually spaced apart along the second direction B-B.

The first end opening 50a and the second end opening 50b are respectively arranged at the first side 30a and at the second side 30b. The first end opening 50a and the second end opening 50b can retain pre-connectorized optical cable connectors 4 and/or optical connectors 5 for optical fibers 3.

According to one embodiment, the first end opening 50a is configured to retain the pre-connectorized optical cable connectors 4.

According to one embodiment, the second end opening 50b is configured to retain optical connectors 5 for optical fibers 3.

According to one embodiment, the support frame 30 comprises a first support member 32 and a second support member 33.

The first support member 32 extends from the base member 10 along the longitudinal direction X-X preferably to the end support portion 31. The first support member 32 is configured to retain the splice trays arrangement 40 on the first side 30a.

The splice trays 41 are hinged to the first support member 32. Namely, the splice trays 41 project from the first support member 32 along the first direction A-A in the resting position and along a rotated direction in the rotated position.

The second support member 33 protrudes from the first support member 32 transversally to the longitudinal direction X-X and comprises adapter seats 34 configured to hold the optical adapters 50 along the second direction B-B.

The adapter seats 34 can comprise passing through channels extending between the first and second side 30a, 30b along the second direction B-B. The passing through channels are configured to receive and retain the optical adapters 50 along the second direction B-B allowing the access to the optical adapters 50 from the first side 30a and to the second side 30b.

According to one embodiment, the support frame 30 comprises a recess 60. Namely, the support frame 30 comprises a protrusion on the first side 30a which defines the recess 60 on the second side 30b.

The recess 60 has a lower base 61, a lateral wall 62 and an access opening 63 on the second side 30b. Namely, the lower base 61 and the lateral wall 62 project from first support member 32 and identify the access opening 63. The recess 60 is configured to accommodate the optical connectors 5 for the optical fibers 3 held by the optical adapters 50 and at least a portion of the optical fibers 3.

It is to be noted that the first support member 32 and the second support member 33 define the lower base 61, the lateral wall 62 and the access opening 63. Namely, the second support member 33 defines the lower base 61 and the lateral wall 62 extending from the first support member 32. In addition, the second support member 33 defines with the first support member 32 the access opening 63 by projecting of the second support member 33 from the first support member 32.

Thanks to the recess, the optical connectors 5 are protected and correct bending radius are provided.

According to one embodiment, the support frame 30 comprises one or more routing passages 35 configured to route one or more optical fibers 3 from the second side 30b to the splice trays 41 on the first side 30a. For example, the routing passages 35 can be notches or apertures formed on the support frame 30 preferably on the first support member 32.

Furthermore, on the second side 30b, the support frame 30 can comprise one or more first routing paths 36 to route the optical fiber 3 from the adapters 50 to the routing passages 35. Such first routing paths 36 can start from the recess 60.

According to one embodiment, the support frame 30 comprises one or more second routing paths 37 to route the optical fibers 3 from the splice trays 41 to the base member 10.

According to some embodiments, the first routing paths 36 and the second routing paths 37 can comprise guiding elements 36a, 37a projecting from the support frame 30 for example from the second support member 32.

The present invention further relates to an optical cable junction box assembly 100.

The optical cable junction box assembly 100 comprises the optical cable junction box 1.

The optical cable junction box assembly 100 further comprises one or more pre-connectorized optical cables 2a attached to respective optical adapters 50 at relative first end openings 51 with one or more pre-connectorized optical cables connectors 4.

According to one embodiment, the optical cable junction box assembly 100 comprises optical connectors 5 for optical fibers 3 attached to respective optical adapters 50 at relative second end opening 52 opposed to the relative first end openings 51 along the second direction B-B.

According to one embodiment, the optical cable junction box assembly 100 one or more cable gland 70 configured to retain one or more optical cable 2. Each cable gland 70 is coupled with opening of the base member 10.

## Claims

1. An optical cable junction box (1) comprising:
- a base member (10) configured to receive optical cables (2) comprising one or more optical fibers (3);
- a dome-shaped cover member (20) configured to define with the base member (10) an inner volume (V);
- a support frame (30) extending into the inner volume (V) between the base member (10) and an end support portion (31) along a longitudinal direction (X-X) transversal to the base member (10);
- a splice tray arrangement (40) attached to the support frame (30) and extending from the support frame (30) along a first direction (A-A) transversal to the longitudinal direction (X-X), the splice tray arrangement (40) comprising one or more splice trays (41) configured to receive one or more optical fibers (3);
wherein the optical cable junction box (1) comprises:
- one or more optical adapters (50) for receiving one or more pre-connectorized optical cable connectors (4) and optical connectors (5) for optical fibers (3), the optical adapters (50) being attached to the support frame (30) and being arranged along a second direction (B-B) transversal to the longitudinal direction (X-X),

2. The optical cable junction box (1) according to claim 1, wherein:
- the support frame (30) has a first side (30a) and an opposed second side (30b),
- the support frame (30) comprises a first support member (32) and a second support member (33).

3. The optical cable junction box (1) according to claim 2, wherein:
- each optical adapter (50) has a first end opening (50a) and opposed second end opening (50b) mutually spaced apart along the second direction (B-B), the first end opening (50a) and the second end opening (50b) being respectively:
- arranged at the first side (30a) and at the second side (30b); and
- configured to retain the pre-connectorized optical cable connectors (4) and the optical connectors (5) for optical fibers (3).

4. The optical cable junction box (1) according to claim 2 or 3, wherein:
- the first support member (32) extending from the base member (10) along the longitudinal direction (X-X), the first support member (32) being configured to retain the splice trays arrangement (40) on the first side (30a); the splice trays (41) being hinged to the first support member (32);
- the second support member (33) protruding from the first support member (32) transversally to the longitudinal direction (X-X) and comprising adapter seats (34) configured to hold the optical adapters (50) along the second direction (B-B).

5. The optical cable junction box (1) according to any claims 2 to 4, wherein the support frame (30) comprises a recess (60) having a lower base (61), a lateral wall (62) and an access opening (63) on the second side (30b), the recess (60) being configured to accommodate the optical connectors (5) for the optical fibers (3) held by the optical adapters (50) and at least a portion of the optical fibers (3), the first support member (32) and the second support member (33) defining the lower base (61), the lateral wall (62) and the access opening (63).

6. The optical cable junction box (1) according to claim 5, wherein the support frame (30) comprises:
- one or more routing passages (35) configured to route one or more optical fibers (3) from the second side (30b) to the splice trays (41) on the first side (30a);
- on the second side (30b) one or more first routing paths (36) to route the optical fiber (3) from the adapters (50) to the routing passages (35), the first routing paths (36) starting from the recess (60).

7. The optical cable junction box (1) according to any claims 1 to 6, wherein the support frame (30) comprises:
- one or more second routing paths (37) to route the optical fibers (3) from the splice trays (41) to the base member (10).

8. The optical cable junction box (1) according to any claims 1 to 7, wherein the first direction (A-A) and the second direction (B-B) define angles (A, B) with the longitudinal direction (X-X) in a range 15° to 75°.

9. The optical cable junction box (1) according to any claims 1 to 8, wherein the first direction (A-A) and the second direction (B-B) define same angles (A, B) with respect the longitudinal direction (X-X)

10. The optical cable junction box (1) according to any claims 1 to 9, wherein the base member (10) comprises one or more openings (11) for receiving optical cables (2).

11. The optical cable junction box (1) according to any claims 1 to 10, wherein
- the splice tray arrangement (40) is attached at the end support portion (31) and the adapters (50) are attached between the base member (10) and the splice tray arrangement (40).

12. An optical cable junction box assembly (100) comprising:
- an optical cable junction box (1) according to any claims 1 to 11;
- one or more pre-connectorized optical cables (2a) attached to respective optical adapters (50) at relative first end openings (51) with one or more pre-connectorized optical cables connectors (4).

13. The optical cable junction box assembly (100) according to claim 12, further comprising:
- optical connectors (5) for optical fibers (3) attached to respective optical adapters (50) at relative second end opening (52) opposed to the relative first end openings (51) along the second direction (B-B).
